# EUROPEAN PATENT APPLICATION

(11) **EP 2 704 036 A2**
(43) Date of publication of application: **05.03.2014**
(21) Application number: 13181208.3
(22) Date of filing: 21.08.2013
(51) Int. Cl.: G06F 17/30

(54) **Movie selecting**

(30) Priority: 31.08.2012 US 201213600749
(71) Applicant: Google Inc., Mountain View, CA 94043 (US)
(72) Inventor: Hewinson, Philip, Mountain View, CA 94043 (US)
(74) Representative: Diehl & Partner GbR

(57) **Abstract**

A method for provisioning of media is disclosed and may include detecting a plurality of users located at a common location. A personal profile for each of the plurality of users may be accessed. The personal profile for each of the plurality of users may include at least one personal media preference related to consumption of media items. Each of the plurality of available media items may be weighted for each of the plurality of users based on the at least one personal media preference. One of the plurality of available media items may be selected for consumption by the plurality of users at the common location, based on the weighting of each of the plurality of available media items. The plurality of users may be detected at the common location by receiving a near field communication (NFC) signal from a user device for each of the plurality of users.

## Description

### TECHNICAL FIELD

Aspects of the present application relate generally to the field of processing digital media content. More specifically, certain implementations of the present disclosure relate to system and/or method for movie finding.

### BACKGROUND

When an individual user would like to watch a movie on his/her own, it is a routine and easy task since the user knows their own preferences well and can, therefore, make a good selection. However, when multiple users would like to watch a movie together, it may become a tedious and difficult task to select a movie matching everyone's preferences. This selection process becomes increasingly more challenging as more people get involved and the group for movie watching expands. Today, with online access to literally thousands of movies with digital content, it may take a very long time for the group of people to come to any consensus and even then, a movie is often selected that is far from optimal for all of the people in the group to view.

Further limitations and disadvantages of conventional and traditional approaches will become apparent to one of skill in the art, through comparison of such approaches with some aspects of the present method and apparatus set forth in the remainder of this disclosure with reference to the drawings.

### BRIEF SUMMARY

A system and/or method is provided for movie finding, substantially as shown in and/or described in connection with at least one of the figures, as set forth more completely in the claims.

In accordance with an embodiment of the disclosure, a method for provisioning of media may include detecting a plurality of users located at a common location. A personal profile for each of the plurality of users may be accessed. The personal profile for each of the plurality of users may include at least one personal media preference related to consumption of media items. Each of a plurality of available media items may be weighted, for each of the plurality of users, based on the at least one personal media preference. One of the plurality of available media items may be selected for consumption by the plurality of users at the common location, based on the weighting of each of the plurality of available media items. The plurality of users at the common location may be detected by receiving a near field communication (NFC) signal from a user device for each of the plurality of users.

A network-enabled media device may be detected at the common location. The selection of one of the plurality of available media items may be provided to the network-enabled media device for consumption by the plurality of users at the common location. The method may also include detecting whether the plurality of users form a social group. The social group may be associated with the consumption of media items. The detecting whether the plurality of users form the social group may include receiving login information to a social network from each of the plurality of users.

The social network may host the personal profile for each of the plurality of users. If the plurality of users form a social group, the plurality of users may be detected at the common location by receiving a GPS signal from a user device for each of the plurality of users, the GPS signal indicating proximity to the common location. The plurality of available media items may be ranked based on the weighting for each of the plurality of users. A highest ranked media item may be selected from the ranked plurality of available media items for consumption by the plurality of users at the common location.

In accordance with another embodiment of the disclosure, a system for provisioning of media may include a network device, where the network device is operable to detect a plurality of users located at a common location. A personal profile may be accessed for each of the plurality of users. The personal profile for each of the plurality of users may include at least one personal media preference related to consumption of media items. Each of a plurality of available media items may be weighted, for each of the plurality of users, based on the at least one personal media preference. One of the plurality of available media items may be selected for consumption by the plurality of users at the common location, based on the weighting of each of the plurality of available media items.

The network device may be operable to detect the plurality of users at the common location by receiving a near field communication (NFC) signal from a user device for each of the plurality of users. The network device may be operable to detect a network-enabled media device at the common location, and provide the selection of one of the plurality of available media items to the network-enabled media device for consumption by the plurality of users at the common location. The network device may also be operable to detect whether the plurality of users form a social group. The social group may be associated with the consumption of media items. The detecting whether the plurality of users form the social group may include receiving login information to a social network from each of the plurality of users. The social network may host the personal profile for each of the plurality of users. The network device may also detect the plurality of users at the common location by receiving a GPS signal from a user device for each of the plurality of users, the GPS signal indicating proximity to the common location. The network device may be further operable to rank the plurality of available media items based on the weighting for each of the plurality of users, and select a highest ranked media item from the ranked plurality of available media items for consumption by the plurality of users at the common location.

In accordance with yet another embodiment of the disclosure, a system for provisioning of media may include a network device, where the network device is operable to receive login credentials from a plurality of users, the login credentials providing access to each of the plurality of users to a social group hosted by a network. The network device may also detect whether at least a portion of the plurality of users are logged into the social group hosted by the network based on the received login credentials. The network device may receive location information from the at least apportion of the plurality of users, and determine whether the at least a portion of the plurality of users are at a common location based on the received location information.

If the at least a portion of the plurality of users are at a common location, the network device may access a personal profile for each of the at least a portion of the plurality of users. The personal profile for each of the at least a portion of the plurality of users may include at least one personal media preference related to consumption of media items. The network device may also weight for each of the at least a portion of the plurality of users, each of a plurality of available media items based on the at least one personal media preference. One of the plurality of available media items may be selected by the network device for consumption by the at least a portion of the plurality of users at the common location, based on the weighting of each of the plurality of available media items.

These and other advantages, aspects and features of the present disclosure, as well as details of illustrated implementation(s) thereof, will be more fully understood from the following description and drawings.

### BRIEF DESCRIPTION OF SEVERAL VIEWS OF THE DRAWINGS

FIG. 1A is a block diagram illustrating example architecture for provisioning of media, in accordance with an example embodiment of the disclosure.

FIG. 1B is a block diagram illustrating example architecture for provisioning of media using a media device sensing a plurality of users at a common location, in accordance with an example embodiment of the disclosure.

FIG. 2 is a block diagram of an example user profile used for provisioning of media, in accordance with an example embodiment of the disclosure.

FIG. 3 is a flow chart illustrating example steps of a method for provisioning of media, in accordance with an example embodiment of the disclosure.

FIG. 4 is a flow chart illustrating example steps of another method for provisioning of media for consumption by a plurality of users forming a social group, in accordance with an example embodiment of the disclosure.

FIG. 5 is a flow chart illustrating example steps of a method for provisioning of media using a media device sensing a plurality of users at a common location, in accordance with an example embodiment of the disclosure.

FIG. 6 is a flow chart illustrating example steps of a method for provisioning of media using dynamic preference input, in accordance with an example embodiment of the disclosure.

### DETAILED DESCRIPTION

As utilized herein the terms "circuits" and "circuitry" refer to physical electronic components (i.e. hardware) and any software and/or firmware ("code") which may configure the hardware, be executed by the hardware, and or otherwise be associated with the hardware. As utilized herein, "and/or" means any one or more of the items in the list joined by "and/or". As an example, "x and/or y" means any element of the three-element set {(x), (y), (x, y)}. As another example, "x, y, and/or z" means any element of the seven-element set {(x), (y), (z), (x, y), (x, z), (y, z), (x, y, z)}. As utilized herein, the term "e.g.," introduces a list of one or more non-limiting examples, instances, or illustrations.

As used herein the terms "media", "digital media" or "digital media item" may include any discrete media object, such as streaming media (e.g., movies), audio files (e.g., songs), video files, games, slide shows, camera captures, and the like. Such digital media may be played back, displayed, or otherwise rendered for a user (or users) to consume the digital media.

The present disclosure relates to a method and system for provisioning of digital media. More specifically, users may record their individual media-related preferences within their online user profiles that already store, for example, personal information, social group membership information, and friends/acquaintances information. The individual media-related preferences may include movie preferences, such as movie genres, favorite actors, specific favorite movies, favorite directors, preferred length of movie, preferred movie rating, and other preferences including visual effects, sound, animation, filming location, year of movie release, etc. An individual user's online profile may be stored at a media backend or hosted by a social network, an online digital media rental or streaming video web site, for example.

In instances when a group of users gather together at a common location, each of the individual online profiles of the users may be checked for their media-related preferences. A database of available digital media (e.g., movies) may be checked against each user's media-related preferences so that a selection of available media may be identified, which selection matches all (or a majority) of the media-related profiles (or portions of the profiles) of the users. In this regard, when users are gathered together at a common location, a top movie selection (from the identified selection of movies), which matches all or a majority of the users' media-related profiles, may be streamed to a network device at the common location for all users to watch.

In accordance with an example embodiment of the disclosure, a method for provisioning of media is disclosed and may include detecting a plurality of users located at a common location. A personal profile for each of the plurality of users may be accessed. The personal profile for each of the plurality of users may include at least one personal media preference related to consumption of media items. Each of the plurality of available media items may be weighted for each of the plurality of users based on the at least one personal media preference. One of the plurality of available media items may be selected for consumption by the plurality of users at the common location, based on the weighting of each of the plurality of available media items. The plurality of users may be detected at the common location by, for example, receiving a near field communication (NFC) signal (or another type of a proximity signal) from a user device for each of the plurality of users.

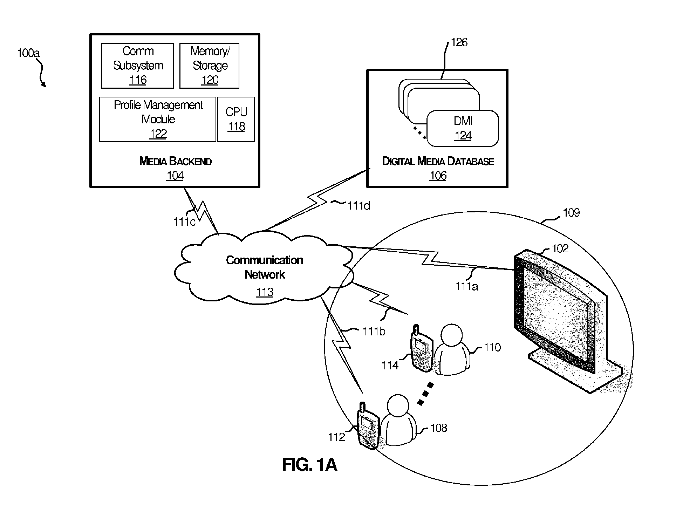

FIG. 1A is a block diagram illustrating example architecture for provisioning of media, in accordance with an example embodiment of the disclosure. Referring to FIG. 1A, the example architecture 100a may comprise a media device (e.g., a TV) 102, a media backend 104, and a digital media database 106, all communicatively coupled to each other via the communication network 113. Additionally, the media device 102 may be in a common location 109 with a plurality of users 108, ..., 110 using a corresponding plurality of client (or user) devices 112, ..., 114.

The media device 102 may comprise suitable circuitry, logic and/or code and may be operable to functions as a display or monitor. Additionally, the media device 102 may be operable to provide set-top box functionalities, as well as media streaming functionalities. In this regard, the media device may also include one or more transceivers for providing wired and/or wireless communication of data (e.g., streaming movies) via the communication link 111a.

The client devices 112, ..., 114 may comprise suitable circuitry, logic and/or code and may be operable to communicate with the media device 102, the media backend 104 and/or the digital media database 106 to establish and manage one or more user profiles (for each of users 108, ..., 110, respectively), which include media-related preferences, social network preferences and other user preferences. The client devices 112, ..., 114 may also be used by corresponding users 108, ..., 110 to "check-in" or "register" at a specific geographic location (e.g., by using a social network), as well as to order a digital media item (e.g., a streaming movie) for consumption at a network-enabled media device or at the corresponding user device itself. In this regard, the client devices 112, ..., 114 may be operable to render or format the received digital media item for consumption by one or more of users 108, ..., 110 at a network-enabled media device (e.g., media device 102) when users 108, ..., 110 are at a common location 109.

Each of the client devices 112, ..., 114 may comprise a handheld computing device (e.g., a cell phone, a smart phone, a personal data assistant (PDA), a tablet), a set-top box device, a laptop computer or another computing device. Furthermore, each the client devices 112, ..., 114 may also include one or more transceivers for providing wired and/or wireless communication of data via the communication links 111b.

The communication network 113 may comprise the Internet as well as any combination of wired and/or wireless networks, such as a Wi-Fi network, a WiMAX network (or another 802.1x enabled network), a satellite network, or a cellular telephone network. The communication links 111a - 111e may comprise one or more wired and/or wireless communication links used to communicate data via the communication network 113.

The media backend 104 may comprise suitable circuitry, logic and/or code and may be operable to provide digital media related services to the client devices 112, ..., 114 and users 108, ..., 110. For example, the media backend 104 may provide digital media storage and management services, subscription services (e.g., streaming media subscription services, social network subscription, and user profile management), and digital media provisioning services. The digital media provisioning services may include, for example, providing digital media items from a digital media database, as well as sale, transcoding, streaming and download of digital media from the digital media database or other subscription or non-subscription based media sources. Additionally, the digital media provisioning services may be provided to one or more of the client devices (e.g., 112, ..., 114) or to another network-enabled media device (e.g., 102) in the vicinity of one or more of the users 108, ..., 110.

The media backend 104 may also comprise memory/storage 120, a communication subsystem 116, a profile management module 122, and a central processing unit (CPU) 118. Even though the media backend 104 is illustrated as being separate from the user devices 112, ..., 114, the disclosure may not be limited in this regard. More specifically, the media backend 104 may be implemented as part of a corresponding client device (e.g., 112, ..., 114) or another computing device of users 108, ..., 110.

The communication subsystem 116 may comprise suitable circuitry, logic, and/or code and may be operable to provide communication of information to and from the digital media database 106, the media device 102, and/or the client devices 112, ..., 114. For example, the communication subsystem 116 may include one or more transceivers for providing wired and/or wireless communication of data to and from the digital media database 106 (via the wired and/or wireless communication links 11c-111d), and/or the media device 102 (via communication links 111c-111a), or the client devices 112, ..., 114 (via the communication links 111c-111b), all using the communication network 113.

The profile management module 122 may comprise suitable circuitry, logic and/or code and may be operable to establish and manage (edit, save, delete) one or more online user profiles for users 108, ..., 110. For example, the profile management module 122 may provide access to user profiles stored at the media backend 104 as well as user profiles (e.g., of users 108, ..., 110) stored at a social network or an e-commerce web site (e.g., streaming media rental service). The profile management module 122 may also manage individual media-related preferences stored within each individual user profile for users 108, ..., 110. The individual media-related preferences may include movie preferences, such as movie genres, favorite actors, specific favorite movies, favorite directors, preferred length of movie, preferred movie rating, and other preferences including visual effects, sound, animation, filming location, year of movie release, etc. The individual user profiles for users 108, ..., 110 may be profiles stored by the media backend 104 or hosted by a social network, an online digital media rental or streaming video web site, for example.

The digital media database 106 may comprise suitable circuitry, logic and/or code and may be operable to manage a plurality of digital media items (DMIs) 124, ..., 126. The plurality of DMIs 124, ..., 126 may comprise a plurality of songs forming a personal music library of user A. Even though the digital media database 106 is illustrated as being separate from the media backend 104, the disclosure may not be limited in this regard. More specifically, the digital media database 106 may be implemented as part of the media backend 104 or one or more of the client devices 112, ..., 114.

In operation, the plurality of users 108, ..., 110 may each gather at a common location 109 (e.g., a movie theatre), which includes a network-enabled media device 102. One or more of the users 108, ..., 110 may use a corresponding client device 112, ..., 114 to subscribe to, for example, a digital media provisioning and management service provided by the media backend 104 or another digital media provisioning service (e.g., streaming movie rental service). As part of the digital media provisioning and management service, one or more of the users 108, ..., 110 may purchase, download, store, organize and generally have access to a plurality of digital media items 124, ..., 126 stored in the digital media database 106. For example, one or more of users 108, ..., 110 may have access to digital media items 124, ..., 126, which may comprise one or more streaming movies, videos, songs or other types of digital media items. Additionally, one or more of the users 108, ..., 110 may have previously purchased for streaming (or downloaded) the digital media items 124, ..., 126, and may download (and store) any of the digital media items 124, ..., 126 locally at a corresponding client device (e.g., one or more of client devices 108, ..., 110), or at a cloud-based digital media locker service for subsequent consumption.

In accordance with an example embodiment of the disclosure, the media backend 104 may detect (e.g., by receiving information from one or more of the client devices 112, ..., 114 or the media device 102) that the plurality of users 108, ..., 110 are at a common location 109. Upon detecting that the plurality of users are at the common location 109, the media backend 104 may use the profile management module 122 to access an online user profile for each of the users 108, ..., 110. More specifically, the profile management module 122 may access media-related preferences in each user profile for users 108, ..., 110. The media backend 104 may then assign weights to each of the digital media items 124, ..., 126 available for consumption to one or more of the users 108, ..., 110, based on the media-related preferences for each of the users 108, ..., 110.

For example, the media backend 104 may first consider the media-related preferences of the first user 108. For each media-related preference specified in the online user profile of user 108, the media backend 104 may assign a weight to one or more of the DMIs 124, ..., 126 that satisfy the particular media-related preference. This process may be repeated until all media-related preferences have been considered for all users 108, ..., 110. One or more of the DMIs 124, ..., 126 may then be selected based on the total assigned weight after accounting individual media-related preferences for all users 108, ..., 110. For example, a top-rated DMI (e.g., with the highest assigned weight) may then be automatically pushed (or downloaded) or streamed to one or more of the user devices 112, ..., 114 for viewing by users 108, ..., 110. In the alternative, the top-rated DMI may be automatically pushed (or downloaded) or streamed to the media device 102 for consumption by the users 108, ..., 110 on the media device 102 while at the common location 109.

In accordance with another example embodiment of the disclosure, the media backend 104 may generate a list of top-rated DMIs available for consumption by users 108, ..., 110, after the weighting process concludes and all individual media-related preferences for all users 108, ..., 110 have been considered. The list of the top-rated DMIs may then be automatically displayed by the media device 102 (or one or more of the client devices 112, ..., 114) so that the users 108, ..., 110 may make a selection of which DMI from the received list of top-rated DMIs to consume (e.g., watch) at the media device 102.

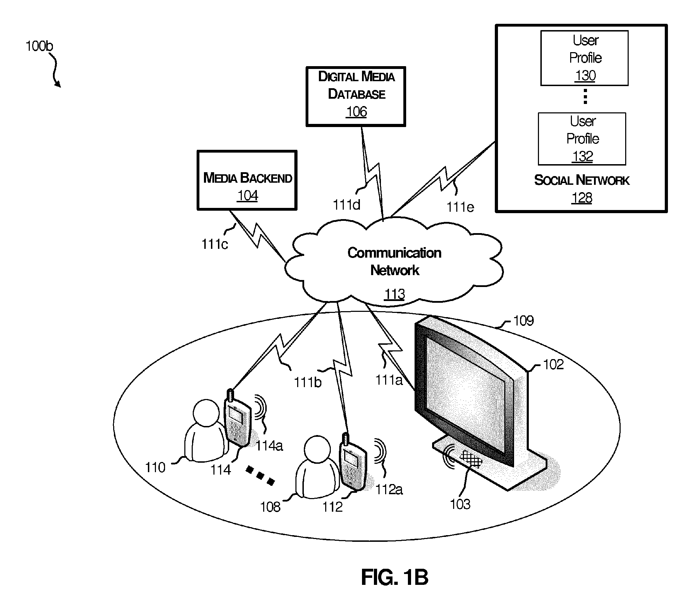

FIG. 1B is a block diagram illustrating example architecture for provisioning of media using a media device sensing a plurality of users at a common location, in accordance with an example embodiment of the disclosure. Referring to FIG. 1B, the example architecture 100b may comprise the same devices as the example architecture 100a in FIG. 1A. However, the example architecture 100b may further comprise a social network 128. Additionally, client devices 112, ..., 114 as well as the media device 102 may each include near field communication (NFC) (or other short range sensing) functionalities.

The social network 128 may comprise suitable circuitry, logic and/or code and may store user profiles 130, ..., 132 for corresponding users 108, ..., 110. The user profiles 130, ..., 132 may store, for example, personal information, information regarding media-related preferences, social group membership information, and friends/acquaintances information associated with users 108, ..., 110, respectively. Additionally, the user profiles 130, ..., 132 may be used by the profile management module 122 within the media backend 104 during the automatic selection of one or more DMIs for consumption by users 108, ..., 110 at the common location 109.

More specifically, the profile management module 122 may communicate with the social network 128 (via communication links 111c, 111e and communication network 113), and obtain, for example, media-related preferences and social group membership information associated with users 108, ..., 110. The media-related preferences may include media (e.g., movie) preferences, such as movie genres, favorite actors, specific favorite movies, favorite directors, preferred length of movie, preferred movie rating, and other preferences including visual effects, sound, animation, filming location, and year of movie release, associated with a user. The social group membership information may include user login and other authentication information for one or more social groups hosted by the social network 128. For example, user profiles 130, ..., 132 may indicate that all users 108, ..., 110 are members of a social "movie enthusiasts" group of people who enjoy watching movies and discussing movie-related topics.

In accordance with an example embodiment of the disclosure, the media device 102 may comprise a near field communication (NFC) receiver 103, which may be used to receive NFC signals (the media device 102 may similarly comprise an NFC transceiver operable to receive and transmit NFC signal). Similarly, each of the client devices 112, ..., 114 may also comprise NFC transceiver functionalities, such as NFC transmission functionalities 112a, ..., 114a, respectively. Users 108, ..., 110 may use the NFC transmission functionalities 112a, ..., 114a of client devices 112, ..., 114 to "tap" or "check in" at the media device 102 using the NFC receiver 103. The NFC transmission and reception functionalities of user devices 112, ..., 114 and media device 102 may be used by the media backend 104 to detect that users 108, ..., 110 are all gathered at a common location 109, in the vicinity of media device 102.

Even though NFC-related functionalities are disclosed in reference to the user devices 112, ..., 114 and media device 102, the present disclosure may not be limited in this regard. Therefore, other type of proximity signals or sensor signals may also be used to detect that users 108, ..., 110 are all gathered at a common location 109, in the vicinity of media device 102. For example, user devices 112, ..., 114 and media device 102 may use radio frequency identification (RFID) signals or other type of signals that may be used to sense/detect the presence of a user at a given location.

In operation, the plurality of users 108, ..., 110 may each gather at a common location 109 (e.g., a movie theatre), which includes a network-enabled media device 102. One or more of the users 108, ..., 110 may use a corresponding client device 112, ..., 114 to subscribe to, for example, a digital media provisioning and management service provided by the media backend 104 or another digital media provisioning service (e.g., streaming movie rental service). As part of the digital media provisioning and management service, one or more of the users 108, ..., 110 may purchase, download, store, organize and generally have access to a plurality of digital media items 124, ..., 126 stored in the digital media database 106. For example, one or more of users 108, ..., 110 may have access to digital media items 124, ..., 126, which may comprise one or more streaming movies, videos, songs or other types of digital media items. Additionally, one or more of the users 108, ..., 110 may have previously purchased for streaming (or downloaded) the digital media items 124, ..., 126, and may download (and store) any of the digital media items 124, ..., 126 locally at a corresponding client device (e.g., one or more of client devices 108, ..., 110), or at a cloud-based digital media locker service for subsequent consumption.

In accordance with an example embodiment of the disclosure, as users 108, ..., 110 gather at location 109 (e.g., a movie theatre), each user may use NFC transmission functionalities 112a, ..., 114a of client devices 112, ..., 114 and "tap" the NFC reader 103 of media device 102 (e.g., a television screen or a movie display). Each "tap" received by the media device 102 may be considered as a confirmation that the given user performing the NFC "tap" is at the common location 109. The media device 102 may use communication links 111a, 111c and communication network 113 to notify the media backend 104 of the presence of each user as the NFC "taps" are being received by the media device 102. In this regard, the media backend 104 may detect (e.g., by receiving the NFC "tap" confirmation information from the media device 102) that the plurality of users 108, ..., 110 are at the common location 109.

Upon detecting that the plurality of users 108, ..., 110 are at the common location 109, the media backend 104 may use the profile management module 122 to access an online user profile for each of the users 108, ..., 110. More specifically, the profile management module 122 may access media-related preferences in each user profile for users 108, ..., 110. The media backend 104 may then assign weights to each of the digital media items 124, ..., 126 available for consumption to one or more of the users 108, ..., 110, based on the media-related preferences for each of the users 108, ..., 110.

For example, the media backend 104 may first consider the media-related preferences of the first user 108. For each media-related preference specified in the online user profile of user 108, the media backend 104 may assign a weight to one or more of the DMIs 124, ..., 126 that satisfy the particular media-related preference. This process may be repeated until all media-related preferences have been considered for all users 108, ..., 110. One or more of the DMIs 124, ..., 126 may then be selected based on the total assigned weight after accounting individual media-related preferences for all users 108, ..., 110. For example, a top-rated DMI (e.g., with the highest assigned weight) may then be automatically pushed (or downloaded) or streamed to one or more of the user devices 112, ..., 114 for viewing by users 108, ..., 110. In the alternative, the top-rated DMI may be automatically pushed (or downloaded) or streamed to the media device 102 for consumption by the users 108, ..., 110 on the media device 102 while at the common location 109.

In accordance with another example embodiment of the disclosure, the media backend 104 may use the user profiles 130, ..., 132 as well as GPS location capabilities of the client devices 112, ..., 114 to detect that the plurality of users 108, ..., 110 are at the common location 109. More specifically, the media backend 104 may use the profile management module 122 to access the user profiles 130, ..., 132 hosted by the social network 128 and determine which users (from the plurality of users 108, ..., 110) belong to a common social group. After the media backend 104 determines which users form a social group together (e.g., all users 108, ..., 110 may belong to a social "movie enthusiasts" group hosted by the social network 128), the media backend 104 may periodically request and receive GPS location information from client devices 112, ..., 114 associated with the users that belong to the same social group (e.g., users 108, ..., 110). The media backend 104 may already have the location information of the network-enabled media device 102, and may compare the received GPS location information with a known location of the media device 102. If it is determined that the received GPS location information for client devices 112, ..., 114 is within a certain proximity to the location of the media device 102, the media backend may determine that all users 108, ..., 110 are located at the common location 109 and within close proximity to media device 102. The media backend 104 may then proceed and select one or more of the DMIs 124, ..., 126 for consumption by users 108, ..., 110 using the media device 102 (as described herein above in reference to FIG. 1A).

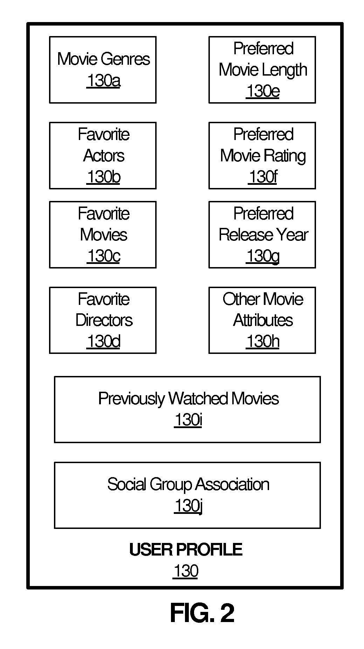

FIG. 2 is a block diagram of an example user profile used for provisioning of media, in accordance with an example embodiment of the disclosure. Referring to FIG. 2, there is illustrated an example user profile (e.g., user profile 130) hosted by the social network 128. The user profile 130 may comprise individual media-related preferences 130a - 130i as well as social group association information 130j.

The individual media-related preferences may comprise movie genres preference 130a, favorite actors preference 130b, favorite movies 130c (e.g., a list of the user's favorite movies), favorite directors 130d (e.g., a list of the user's favorite movie directors), preferred length of movie 130e, preferred movie rating 130f, preferred movie release year 130g, and other movie attributes preference 130h (e.g., preferences such as type of visual effects, sound, animation, filming location and other media-related information).

The individual media-related preferences may also include previously watched movies information 130j. The previously watched movies information 130i may be used by the media backend 104 during the selection of the one or more DMIs for consumption by users 108, ..., 110 at the common location 109. For example, the media backend 104 may give less weight to movies previously watched by the user, or more weight if the user expresses preference to watch a movie that was already watched in the past.

Additionally, the previously watched movies information 130j may be automatically captured and stored by the media backend 104 or by an online service providing the rental / streaming of movies to users 108, ..., 110 at the common location 109. Alternatively, the user (e.g., user 108) may manually enter movies they have watched before into their online user profile 130. Furthermore, user 108 (and any of the other users) may rate the movies they have previously watched and indicate (e.g., as another field in the profile 130) whether the user would like to watch the same movies again (and possibly further information identifying the user's taste in movies based on their thoughts on past movies watched).

The user profile 130 may also comprise social group association information 130j, which may be used to identify whether the corresponding user (e.g., user 108) is a member of a specific social group. The social group association information may be used to detect whether users 108, ..., 110 are at a common location 109 so that a movie may be automatically streamed to media device 102 for consumption by users 108, ..., 110 (as already explained above in reference to FIG. 1B).

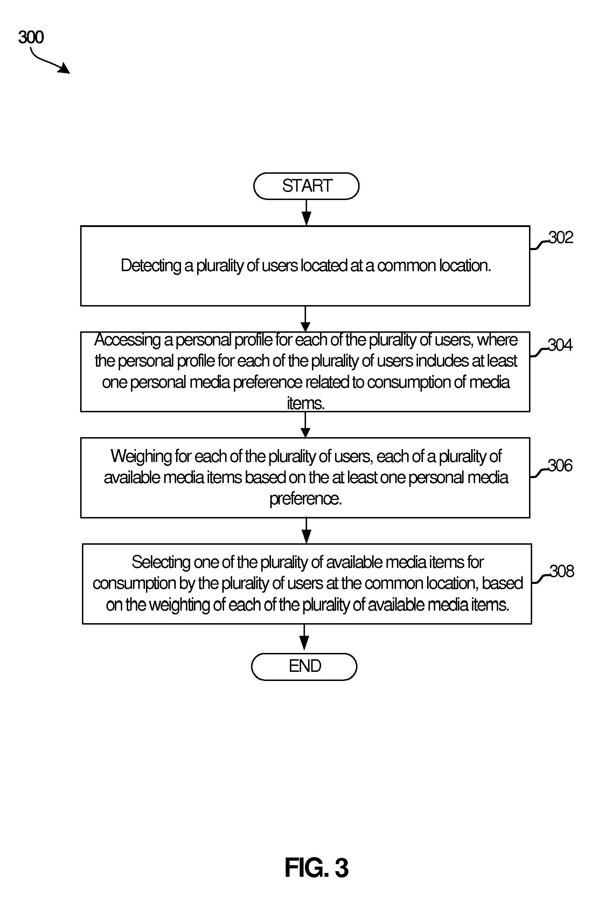

FIG. 3 is a flow chart illustrating example steps of a method for provisioning of media, in accordance with an example embodiment of the disclosure. Referring to FIG. 3, the example method 300 may start at 302, a plurality of users located at a common location may be detected. For example, as explained in reference to FIGS. 1A-1B, the media backend 104 may detect users 108, ..., 110 located at the common location 109 and in proximity to the media device 102. At 304, a personal profile (e.g., 130, ..., 132) for each of the plurality of users may be accessed (e.g., by the media backend 104). The personal profile for each of the plurality of users may include at least one personal media preference related to consumption of media items (e.g., 130a - 130i). At 306, the media backend 104 may weight for each of the plurality of users 108, ..., 110, each of a plurality of available media items (e.g., DMIs 124, ..., 126) based on the at least one personal media preference (e.g., preferences such as 130a - 130i for each user profile 130, ..., 132). At 308, one of the plurality of available media items may be selected for consumption by the plurality of users 108, ..., 110 at the common location 109, based on the weighting of each of the plurality of available media items (DMIS 124, ..., 126).

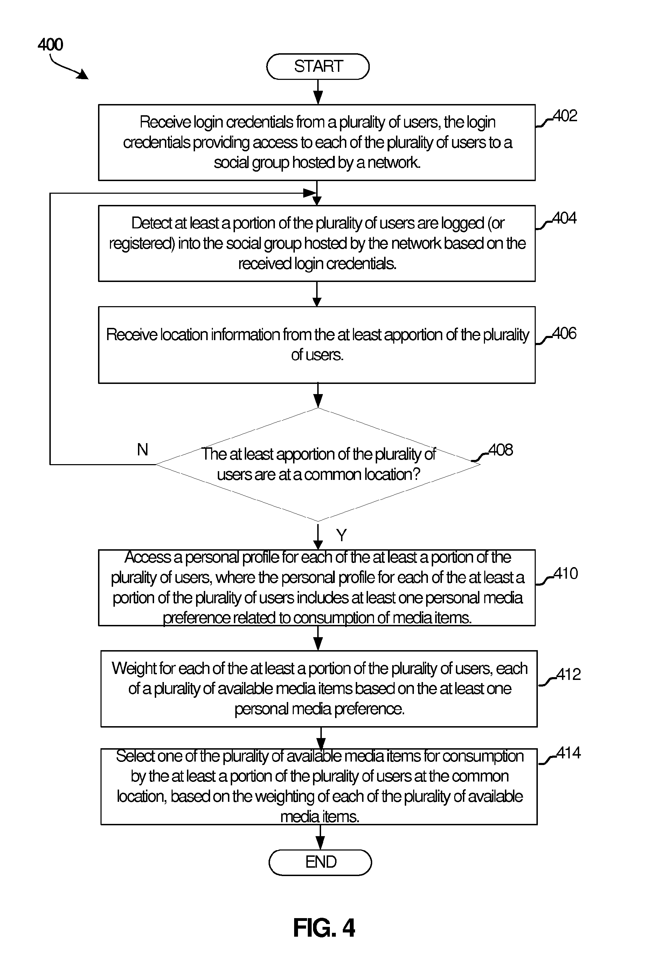

FIG. 4 is a flow chart illustrating example steps of another method for provisioning of media for consumption by a plurality of users forming a social group, in accordance with an example embodiment of the disclosure. Referring to FIG. 4, the example method 400 may start at 402 when login credentials from a plurality of users (e.g., users 108, ..., 110) may be received (e.g., by the media backend 104). The login credentials may provide access to each of the plurality of users to a social group hosted by a network. At 404, the media backend 104 may detect at least a portion of the plurality of users 108, ..., 110 are logged (or registered) into the social group hosted by the network (e.g., social network 128) based on the received login credentials.

For example, each of the users 108, .. , 110 may communicate login credentials to the media backend 104 using the client devices 108, ..., 110, where the login credentials may provide the media backend 104 access to corresponding user profiles 130, ..., 132. The user profiles 130, ..., 132 may indicate whether or not a corresponding user (108, ..., 110) is a member of a social group hosted by the social network 128 (e.g., a social "movie enthusiasts" group).

At 406, location information may be received (e.g., by the media backend 104) from the at least apportion of the plurality of users 108, ..., 110. At 408, it may be determined whether the at least apportion of the plurality of users 108, ..., 110 are at a common location 109. For example, the media backend 104 may determine (based on the received user login credentials) that users 108, ..., 110 all belong to a social group hosted by a social network (e.g., 128). Additionally, based on received location information (e.g., GPS information from the client devices 112, ..., 114), it may be determined whether users 108, ..., 110 are all at a common location (e.g., 109) in proximity to the media device 102.

If the at least a portion of the plurality of users 108, ..., 110 are not at a common location 109, processing may resume at step 404. If the at least a portion of the plurality of users 108, ..., 110 are at a common location 109, processing may resume at 410 when the media backend 104 may access a personal profile (e.g., 130, ..., 132) for each of the at least a portion of the plurality of users 108, ..., 110. The personal profile (130, ..., 132) for each of the at least a portion of the plurality of users may include at least one personal media preference related to consumption of media items (e.g., 130a-130i).

At 412, the media backend 104 may weight for each of the at least a portion of the plurality of users, each of a plurality of available media items (e.g., DMIs 124, ..., 128) based on the at least one personal media preference (e.g., 130a-130i). At 414, one of the plurality of available media items may be selected for consumption by the at least a portion of the plurality of users 108, ..., 110 at the common location 109, based on the weighting of each of the plurality of available media items.

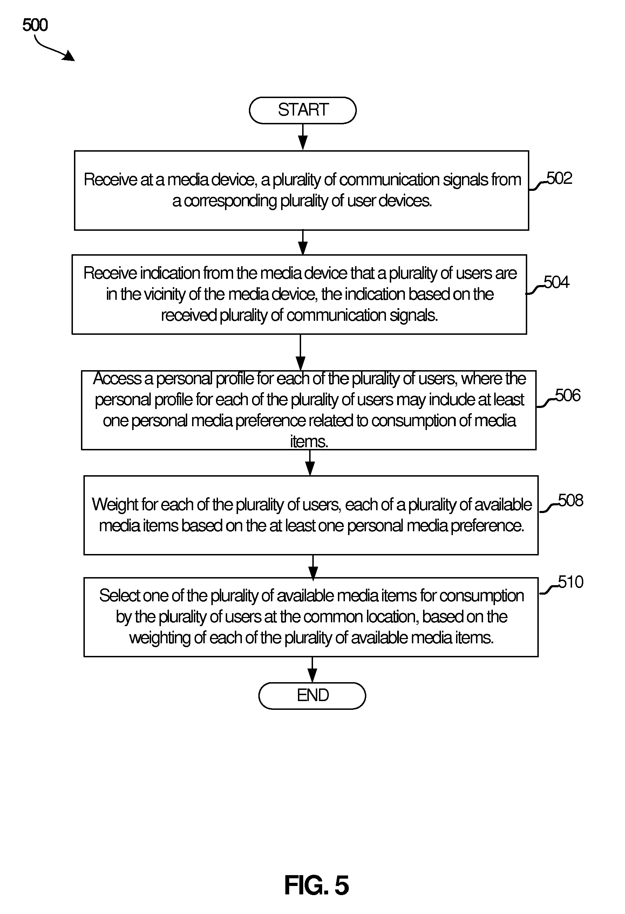

FIG. 5 is a flow chart illustrating example steps of a method for provisioning of media using a media device sensing a plurality of users at a common location, in accordance with an example embodiment of the disclosure. Referring to FIG. 5, the example method 500 may start at 502, when, a plurality of communication signals may be received at a media device (e.g., 102) from a corresponding plurality of user devices (e.g., 108, ..., 110). At 504, an indication (e.g., a GPS signal) may be received from the media device 102 that a plurality of users (e.g., 108, ..., 110) are in the vicinity of the media device 102. The indication may be based on the received plurality of communication signals (e.g., GPS signals from the client devices 108, ..., 110).

At 506, the media backend 104 may access a personal profile (130, ..., 132) for each of the plurality of users (108, ..., 110), where the personal profile for each of the plurality of users may include at least one personal media preference (130a-130i) related to consumption of media items. At 508, the media backend 104 may weight for each of the plurality of users 108, ..., 110, each of a plurality of available media items (e.g., DMIs 124, ..., 126) based on the at least one personal media preference (130a-130i). At 510, the media backend 104 may select one of the plurality of available media items (DMIs 124, ..., 126) for consumption by the plurality of users 108, ..., 110 at the common location 109, based on the weighting of each of the plurality of available media items.

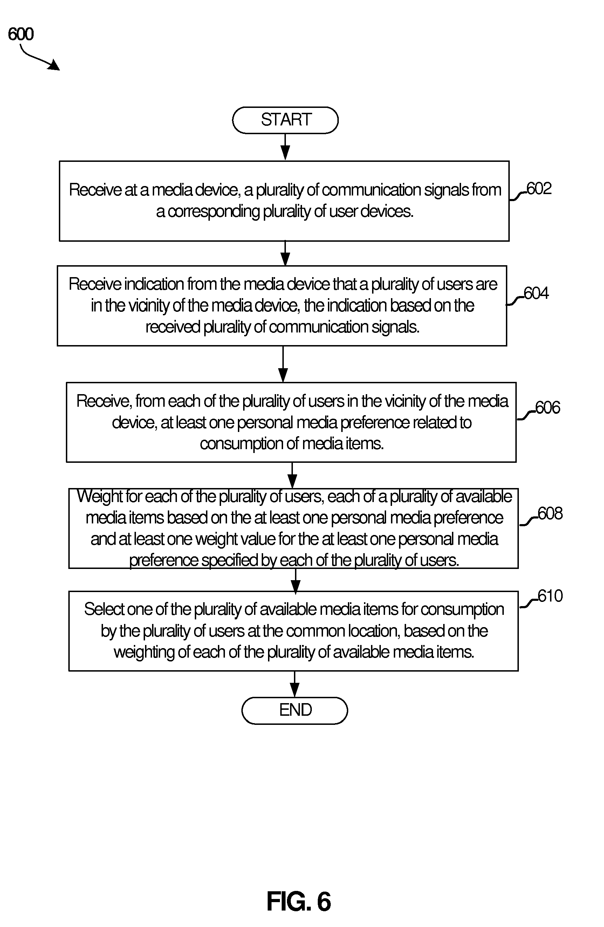

FIG. 6 is a flow chart illustrating example steps of a method for provisioning of media using dynamic preference input, in accordance with an example embodiment of the disclosure. Referring to FIG. 6, the example method 600 may start at 602 when a plurality of communication signals from a corresponding plurality of user devices may be received at a media device (e.g., 102). At 604, an indication (e.g., a GPS signal) may be received from the media device 102 that a plurality of users (e.g., 108, ..., 110) are in the vicinity of the media device 102. The indication may be based on the received plurality of communication signals (e.g., GPS signals from the client devices 108, ..., 110).

At 606, at least one personal media preference related to consumption of media items (e.g., one or more of 130a - 130i) may be received from each of the plurality of users 108, ..., 110 in the vicinity of the media device 102. At 608, the media backend 104 may weight for each of the plurality of users, each of a plurality of available media items (e.g., DMIs 124, ..., 126) based on the at least one personal media preference (130a-130i) and at least one weight value for the at least one personal media preference specified by each of the plurality of users 108, .. , 110. At 610, the media backend 104 may select one of the plurality of available media items for consumption by the plurality of users 108, ..., 110 at the common location 109, based on the weighting of each of the plurality of available media items.

Other implementations may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for provisioning of media.

Accordingly, the present method and/or system may be realized in hardware, software, or a combination of hardware and software. The present method and/or system may be realized in a centralized fashion in at least one computer system, or in a distributed fashion where different elements are spread across several interconnected computer systems. Any kind of computer system or other system adapted for carrying out the methods described herein is suited. A typical combination of hardware and software may be a general-purpose computer system with a computer program that, when being loaded and executed, controls the computer system such that it carries out the methods described herein.

The present method and/or system may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present method and/or apparatus has been described with reference to certain implementations, it will be understood by those skilled in the art that various changes may be made and equivalents may be substituted without departing from the scope of the present method and/or apparatus. In addition, many modifications may be made to adapt a particular situation or material to the teachings of the present disclosure without departing from its scope. Therefore, it is intended that the present method and/or apparatus not be limited to the particular implementations disclosed, but that the present method and/or apparatus will include all implementations falling within the scope of the appended claims.

The subject matter of the following paragraphs is part of the disclosure of the present application and may be claimed in the present application or a divisional application there from:

A method for provisioning of media, the method comprising: detecting a plurality of users located at a common location; accessing a personal profile for each of the plurality of users, wherein the personal profile for each of the plurality of users comprises at least one personal media preference related to consumption of media items; weighting for each of the plurality of users, each of a plurality of available media items based on the at least one personal media preference; and selecting one of the plurality of available media items for consumption by the plurality of users at the common location, based on the weighting of each of the plurality of available media items.

The method according to paragraph [0069], comprising: detecting the plurality of users at the common location by receiving a near field communication (NFC) signal from a user device for each of the plurality of users.

The method according to paragraph [0069] or [0070], comprising: detecting a network-enabled media device at the common location.

The method according to paragraph [0071], comprising: providing the selection of one of the plurality of available media items to the network-enabled media device for consumption by the plurality of users at the common location.

The method according to one of paragraphs [0069] to [0072], comprising: detecting whether the plurality of users form a social group, wherein the social group is associated with the consumption of media items.

The method according to paragraph [0073], wherein the detecting whether the plurality of users form the social group comprises receiving login information to a social network from each of the plurality of users.

The method according to paragraph [0074], wherein the social network hosts the personal profile for each of the plurality of users.

The method according to paragraph [0074] or [0075], comprising: if the plurality of users form a social group, detecting the plurality of users at the common location by receiving a GPS signal from a user device for each of the plurality of users, the GPS signal indicating proximity to the common location.

The method according to one of paragraphs [0069] to [0076], comprising: ranking the plurality of available media items based on the weighting for each of the plurality of users.

The method according to paragraph [0077], comprising: selecting a highest ranked media item from the ranked plurality of available media items for consumption by the plurality of users at the common location.

A system for provisioning of media, the system comprising: a network device, the network device being operable to: detect a plurality of users located at a common location; access a personal profile for each of the plurality of users, wherein the personal profile for each of the plurality of users comprises at least one personal media preference related to consumption of media items; weight for each of the plurality of users, each of a plurality of available media items based on the at least one personal media preference; and select one of the plurality of available media items for consumption by the plurality of users at the common location, based on the weighting of each of the plurality of available media items.

The system according to paragraph [0079], wherein the network device is operable to: detect the plurality of users at the common location by receiving a near field communication (NFC) signal from a user device for each of the plurality of users.

The system according to paragraph [0079] or [0080], wherein the network device is operable to: detect a network-enabled media device at the common location.

The system according to paragraph [0081], wherein the network device is operable to: provide the selection of one of the plurality of available media items to the network-enabled media device for consumption by the plurality of users at the common location.

The system according to one of paragraphs [0079] to [0082], wherein the network device is operable to: detect whether the plurality of users form a social group, wherein the social group is associated with the consumption of media items.

The system according to paragraph [0083], wherein the detecting whether the plurality of users form the social group comprises receiving login information to a social network from each of the plurality of users.

The system according to paragraph [0084], wherein the social network hosts the personal profile for each of the plurality of users.

The system according to paragraph [0084] or [0085], wherein, if the plurality of users form a social group, the network device is operable to: detect the plurality of users at the common location by receiving a GPS signal from a user device for each of the plurality of users, the GPS signal indicating proximity to the common location.

The system according to one of paragraphs [0079] to [0086], wherein the network device is operable to: rank the plurality of available media items based on the weighting for each of the plurality of users; and select a highest ranked media item from the ranked plurality of available media items for consumption by the plurality of users at the common location.

A system for provisioning of media, the system comprising: a network device, the network device being operable to: receive login credentials from a plurality of users, the login credentials providing access to each of the plurality of users to a social group hosted by a network; detect at least a portion of the plurality of users are logged into the social group hosted by the network based on the received login credentials; receive location information from the at least apportion of the plurality of users; determine whether the at least apportion of the plurality of users are at a common location based on the received location information; and if the at least apportion of the plurality of users are at a common location: access a personal profile for each of the at least a portion of the plurality of users, wherein the personal profile for each of the at least a portion of the plurality of users comprises at least one personal media preference related to consumption of media items; weight for each of the at least a portion of the plurality of users, each of a plurality of available media items based on the at least one personal media preference; and select one of the plurality of available media items for consumption by the at least a portion of the plurality of users at the common location, based on the weighting of each of the plurality of available media items.

In brief, a method for provisioning of media is disclosed and may include detecting a plurality of users located at a common location. A personal profile for each of the plurality of users may be accessed. The personal profile for each of the plurality of users may include at least one personal media preference related to consumption of media items. Each of the plurality of available media items may be weighted for each of the plurality of users based on the at least one personal media preference. One of the plurality of available media items may be selected for consumption by the plurality of users at the common location, based on the weighting of each of the plurality of available media items. The plurality of users may be detected at the common location by receiving a near field communication (NFC) signal from a user device for each of the plurality of users.

## Claims

1. A method for provisioning of media, the method comprising:
detecting a plurality of users located at a common location;
accessing a personal profile for each of the plurality of users, wherein the personal profile for each of the plurality of users comprises at least one personal media preference related to consumption of media items;
weighting for each of the plurality of users, each of a plurality of available media items based on the at least one personal media preference; and
selecting one of the plurality of available media items for consumption by the plurality of users at the common location, based on the weighting of each of the plurality of available media items.

2. The method according to claim 1, comprising:
detecting the plurality of users at the common location by receiving a near field communication (NFC) signal from a user device for each of the plurality of users.

3. The method according to claim 1 or 2, comprising:
detecting a network-enabled media device at the common location.

4. The method according to claim 3, comprising:
providing the selection of one of the plurality of available media items to the network-enabled media device for consumption by the plurality of users at the common location.

5. The method according to one of claims 1 to 4, comprising:
detecting whether the plurality of users form a social group, wherein the social group is associated with the consumption of media items.

6. The method according to claim 5, wherein the detecting whether the plurality of users form the social group comprises receiving login information to a social network from each of the plurality of users.

7. The method according to claim 6, wherein the social network hosts the personal profile for each of the plurality of users.

8. The method according to claim 6 or 7, comprising:
if the plurality of users form a social group, detecting the plurality of users at the common location by receiving a GPS signal from a user device for each of the plurality of users, the GPS signal indicating proximity to the common location.

9. The method according to one of claims 1 to 8, comprising:
ranking the plurality of available media items based on the weighting for each of the plurality of users.

10. The method according to claim 9, comprising:
selecting a highest ranked media item from the ranked plurality of available media items for consumption by the plurality of users at the common location.

11. The method according to one of claims 1 to 10, comprising:
receiving login credentials from a plurality of users, the login credentials providing access to each of the plurality of users to a social group hosted by a network; and
detecting at least a portion of the plurality of users are logged into the social group hosted by the network based on the received login credentials.

12. The method according to claim 11, comprising:
receive location information from the at least a portion of the plurality of users; and
determine whether the at least a portion of the plurality of users are at a common location based on the received location information;
wherein in the step of detecting a plurality of users located at a common location it is determined whether the at least apportion of the plurality of users are at a common location based on the received location information, and the method is applied to the at least a portion of the plurality of users if the at least apportion of the plurality of users are at a common location.

13. A system for provisioning of media, the system comprising:
a network device, the network device being operable to perform the method of one of claims 1 to 12.

14. A system for provisioning of media, the system comprising:
a network device, the network device being operable to:
receive login credentials from a plurality of users, the login credentials providing access to each of the plurality of users to a social group hosted by a network;
detect at least a portion of the plurality of users are logged into the social group hosted by the network based on the received login credentials;
receive location information from the at least a portion of the plurality of users;
determine whether the at least a portion of the plurality of users are at a common location based on the received location information; and
if the at least apportion of the plurality of users are at a common location:
access a personal profile for each of the at least a portion of the plurality of users, wherein the personal profile for each of the at least a portion of the plurality of users comprises at least one personal media preference related to consumption of media items;
weight for each of the at least a portion of the plurality of users, each of a plurality of available media items based on the at least one personal media preference; and
select one of the plurality of available media items for consumption by the at least a portion of the plurality of users at the common location, based on the weighting of each of the plurality of available media items.
